## Europäisches Patentamt

## European Patent Office

## Office européen des brevets

(19)

(11) Veröffentlichungsnummer: **0 185 142**

**A2**

(12) **EUROPÄISCHE PATENTANMELDUNG**

(21) Anmeldenummer: **85110965.2**

(22) Anmeldetag: **30.08.85**

(51) Int. Cl.⁴: **A 23 K 1/16**

Ein Antrag gemäss Regel 88 auf Berichtigung der Seite 7 liegt vor. Über diesen Antrag wird im Laufe des Verfahrens von der Prüfungsabteilung eine Entscheidung getroffen werden.

(30) Priorität: **31.08.84 DE 3432120**

(43) Veröffentlichungstag der Anmeldung:
**25.06.86 Patentblatt 86/26**

(84) Benannte Vertragsstaaten:
**AT BE CH DE FR GB IT LI LU NL SE**

(71) Anmelder: **Karwendel-Werke Franz X. Huber**
**Karwendelstrasse 6-16**
**D-8938 Buchloe/Allgäu(DE)**

(72) Erfinder: **Meyer, Dorothee, Dr. med. vet.**
**Rapperzell 39**
**D-8896 Schiltberg(DE)**

(72) Erfinder: **Reuter, Wolfgang**
**Buchenstrasse 12**
**D-5190 Stolberg (Rhld.)(DE)**

(74) Vertreter: **von Füner, Alexander, Dr. et al,**
**Patentanwälte v. Füner, Ebbinghaus, Finck Mariahilfplatz 2 & 3**
**D-8000 München 90(DE)**

(54) Fettmischungen als Futtermittelzusatz und daraus hergestelltes Futtermittel.

(57) Gegenstand der Erfindung ist ein Futtermittelzusatz und ein daraus hergestelltes Futtermittel, insbesondere ein Milchaustauscher, wobei der Futtermittelzusatz Knochenfett, Kokosfett, Palmkernfett, Sojaöl sowie einen Emulgator in folgenden Mengen in Gew.-% enthält:

| | |
|---|---|
| Knochenfett | 60 bis 70 |
| Kokosfett | 5 bis 12 |
| Palmkernfett | 25 bis 10 |
| Sojaöl | 8 bis 3 |
| Emulgator und ggf. Antioxydans | 2 bis 5 |

Die Fettkomposition enthält Fettsäuren in folgender Verteilung, in Gew.-Teilen:

| | |
|---|---|
| $C_4$-$C_{12}$ | 11,5 bis 17,0 |
| $C_{14}$ | 4,0 bis 8,0 |
| $C_{16}$ Palmitinsäure | 15,0 bis 25,0 |
| $C_{16:1}$ Palmitoleinsäure | 2,0 bis 6,0 |
| $C_{18}$ Stearinsäure | 9,5 bis 17,0 |
| $C_{18:1}$ Ölsäure | 32,0 bis 40,0 |
| $C_{18:2}$ Linolsäure | 6,0 bis 12,0 |
| $C_{18:3}$ Linoleinsäure | höchstens 1,5 |
| $C_{20}$ und höhere | höchstens 1,5 |

## FETTMISCHUNGEN ALS FUTTERMITTELZUSATZ UND DARAUS HERGESTELL-
## TES FUTTERMITTEL

In der DE-OS 26 55 380 wird ein magermilchfreier Milchaustauscher für Säugetiere, insbesondere für die Kälberaufzucht auf
Milchbasis mit einem Gehalt an Molkenpulver und Fett beschrieben, der im wesentlichen aus einem Molkenpulver besteht, welchem 20 bis 55 % der normalerweise im Molkenpulver enthaltenen
Kationen entzogen sind und welches einen verminderten Laktosegehalt aufweist, wobei der Aschegehalt unter 13 Gew.-%, der Eiweißgehalt über 17 Gew.-%, der Fettgehalt über 9 Gew.-%, der
Wassergehalt unter 5 Gew.-%, jeweils bezogen auf Trockensubstanzgehalt, der pH-Wert zwischen 4,5 und 4,0, gemessen in
10%iger wässeriger Lösung, das Ca/P-Verhältnis zwischen 1,2:1
und 2:1 liegt und eine organische Säure mit konservierenden
Eigenschaften enthält.

Laut Beispiel 1 wird eine flüssige Mischung aus 25 kg Rinderfett, 12 kg Schweinefett, 10 kg Palmkernfett, 2 kg Sojaöl und
1 kg Monostearat eingesetzt. Dieses Fettgemisch wird mit 1000
kg eines Molkekonzentrats vermischt und nach Homogenisierung
auf Fetteilchenpartikel von 1 bis 5 µ schonend sprühgetrocknet.
Anschließend wird dieses Produkt noch mit Calciumformiat konserviert und in üblicher Weise vitaminisiert.

Bekannt war ferner die Verwendung einer Fettmischung aus 60 %
Seetieröl und 30 % Palmöl, Rest Sojaöl.

Aus der DE-OS 1 803 980 ist ein Milchaustauschfuttermittel für
die Kälberaufzucht und Kälbermast bekannt, das 21 bis 45 % Molkepulver, höchstens 50 % Magermilchpulver (wobei die Summe von
Molkenpulver und Magermilchpulver 60 bis 85 % beträgt), ggf. je
0,5 bis 1 % Glysin und/oder Methionin sowie Fette, Mineralstoffe, Spurenelemente, Vitamine, Antibiotika, Stärkeprodukte und
pflanzliche Eiweißfuttermittel in üblichen Mengen und Verhältnissen enthält. Ziel dieses Vorschlags ist es, teueres Eiweiß
durch billigeres pflanzliches Eiweiß zu ersetzen, womit automatisch eine schlechtere Verträglichkeit des Milchaustauschfuttermittels verbunden ist. Die bei dem bekannten Milchaustauschfuttermittel angegebenen Fettzusätze sind, wie speziell aus den
Beispielen ersichtlich, ein Mischfett, bestehend aus raffiniertem Rindertalg, raffiniertem Kokosfett, doppelt raffiniertem Palmöl und Sojalecithin. Es handelt sich also hier nicht um einen Butterfettaustauscher als solchen, der eine bessere Verträglichkeit und bessere biologische Wertigkeit bringen soll.

Der Rolle des Futtermittelzusatzes in der modernen Landwirtschaft, besonders auch im Hinblick auf die Konkurrenzfähigkeit innerhalb der EWG, kommt eine immer größere Bedeutung zu. Die Tierhaltung erfolgt auf engem Raum, insbesondere während der kühleren Jahreszeit, woraus ein erheblich erhöhtes Krankheitsrisiko entsteht und eine größere Empfindlichkeit des Einzeltieres, auch aufgrund der Hochleistungzüchtung und Überzüchtung. Es besteht deshalb ein erheblicher Bedarf an qualitativ hochwertigen Futtermittelzusätzen, insbesondere an qualitativ hochwertigen Milchaustauschern für die Aufzucht und Jungviehmast.

Im einzelnen bestand die Aufgabe der Erfindung darin, einen Futtermittelzusatz zu entwickeln, der das Futtermittel derart gestaltet, daß es in seinem Aufbau der Milch, insbesondere der Milch des Muttertieres am nächsten kommt. Es ist klar, daß das Jungvieh am besten ein Futtermittel verwertet, das in seinen Komponenten und der Zusammensetzung der Muttermilch am nächsten kommt.

Diese Aufgabe wird wie aus den nachstehenden Ansprüchen ersichtlich gelöst. Wichtig ist die Fettsäurenverteilung. Die Formulierung der einzelnen Fette kann variieren.

Im folgenden wird die Erfindung am Beispiel Kuh - Kalb bzw. Kuhmuttermilch erläutert. Die gleichen Überlegungen treffen jedoch auch für andere Systeme, also Stutenmilch - Fohlen, Ziegenmilch - Zicke, Saumuttermilch - Ferkel etc. zu.

Der erfindungsgemäße Futtermittelzusatz bzw. das erfindungsgemäße Futtermittel sollte also in seinen Komponenten so gestaltet sein, daß es der Kuhmuttermilch nahekommt und nicht nur genauso verträglich wie die Kuhmilch ist, sondern auch genauso energiereich bzw. wenn

- 3 -

0185142

möglich, um ein Mehrfaches energiereicher. In diesem Zu-sammenhang kommt der Zusammensetzung der Fettkomponente eine maßgebliche Rolle zu, da 35 bis 40 % der verdauli-chen Energie eines Milchaustauschers über den Fettanteil gedeckt werden. Das in dem erfindungsgemäßen Futtermittelzusatz bzw. Futtermittel enthaltene Fett sollte also dem Butterfett der Milch größtmöglich ähnlich sein, um der Physiologie des Kalbes gerecht zu werden.

Die Kriterien an ein Futtermittel, insbesondere Milchaustauscher, sind folgende:

1. Gute Futterverwertung, gute Futteraufnahme, gutes und ungestörtes Allgemeinwachstum bei guter Entwicklung der Organe, beste Schlachtkörperqualität bei hoher Ausschlachtung.

2. Hinsichtlich der Verabreichbarkeit muß das Futtermittel automatentauglich sein, gut lagerfähig, gut rieselfähig, löslich und gleichbleibend in der Qualität.

Erfindungsgemäß wurde nun festgestellt, daß durch die Verwendung von Knochenfett und Kokosfett zusammen mit Palmkernfett und Sojaöl in einem Milchaustauscher den oben gestellten Kriterien am besten entsprochen werden kann. Durch den Gehalt an Knochenfett und Kokosfett neben Palmkernfett und Sojaöl wird der erfindungsgemäße Milchaustauscher gut verträglich und verdaulich, es entfallen die Ballaste im Darmsystem. Die Teilchengröße ist bei einer stabilen Öl- und Wasseremulsion optimal, so daß kein Aufrahmen im Eimer stattfindet. und beim Einsatz geeigneter Emulgatoren eine sehr gute Futterverwertung erzielt wird.

Das erfindungsgemäße Futtermittel, d.h. der Milchaustauscher, läßt sich auf üblichen Anlagen in einfacher Weise herstellen.

Der Ersatz von Seetieröl durch Knochenfett, Kokosöl und Sojaöl gibt bei Verfütterung hervorragende Ergebnisse. Das Knochenfett ist ein physiologisches Fett und ist gut verdaulich. Die Teilchengröße liegt unter 3 µm bis maximal 5 µm und das Fett hat einen Fließschmelzpunkt unter 38°C. Kokos- und Palmkernfett statt bisher Palmöl garantieren einen extrem hohen Gehalt an niedrigeren Fettsäuren und verleihen damit der Fettmischung den butterähnlichen Charakter hinsichtlich der Fettsäurenverteilung. Dies ist physiologisch unabdingbar, da unter den physiologischen Bedingungen im Labmagen eine während des Saugaktes am Zungengrund sezernierte und mit der Nahrung abgeschluckte Esterase die Triglycerid-bindung eben dieser Fettsäuren bereits spaltet. Damit liegt beim Übertritt der Nahrung vom Labmagen in den Dünndarm ein Teil der Fettsäuren in freier Form vor (sofort resorbierbar), was wiederum eine optimale Verdaubarkeit des Fettkonzentrats garantiert, was wiederum optimale Futterverwertung bedingt, sowie eine Verminderung des Fütterungsstress.

Der Einsatz von Sojaöl und Sojalecithin vermittelt dem erfindungsgemäßen Futtermittel die wichtige Fettsäure Linolsäure, die auch im Knochenfett vorhanden ist.

Erfindungsgemäß soll der Futtermittelzusatz, also der Fettbestandteil des Futtermittels

60 bis 70 Gew.-% Knochenfett,
5 bis 12 Gew.-% Kokosfett,
25 bis 10 Gew.-% Palmkernfett,
8 bis 3 Gew.-% Sojaöl und
2 bis 5 Gew.-% Emulgator und ggf. Antioxydans enthalten. Dabei ist es bevorzugt, den Gehalt an Emulgator innerhalb des Bereiches möglichst niedrig zu halten und dies hauptsächlich aus Kostengründen. Im Fett

ist Antioxydans in geringen Mengen enthalten, die man durchaus als Spuren bezeichnen kann. Als Antioxydantien kommen hauptsächlich BHT und Ethoxyquin in Frage, wobei BHT 2,6-Ditert.-butyl-p-kresol und Ethoxyquin 6-Ethoxy-1,2-dihydro-2,2,4-trimethylchinolin sind. Weitere Antioxydantien sind Butylhydroxianisol, Ascorbinsäure-(Vitamin C)-Verbindungen, Gallate und Tocopherole (Vitamin E). Die Antioxydantien können einzeln oder als Gemisch verwendet werden. Der Mengenanteil an Antioxydans kann als Spuren bezeichnet werden und in der Größenordnung von einigen ppm liegen, also in den auf diesem Gebiet bekannten Mengen.

Den erfindungsgemäßen Futtermittelzusatz kann man vom Aufbau her nicht nur als Gemisch der vorgeschlagenen Einzelfette + Emulgator ansehen, sondern auch als eine einheitliche Fettkomposition mit einer vorgegebenen Verteilung an Fettsäuren. Um nun das Butterfett zu erreichen und zu übertreffen, ist die Fettsäureverteilung folgende:

| | |
|---|---|
| $C_4$-$C_{12}$ | 11,5 - 17,0 Gew.-T. |
| $C_{14}$ | 4,0 - 8,0 Gew.-T. |
| $C_{16}$ Palmitinsäure | 15,0 - 25,0 Gew.-T. |
| $C_{16:1}$ Palmitoleinsäure | 2,0 - 6,0 Gew.-T. |
| $C_{18}$ Stearinsäure | 9,5 - 17,0 Gew.-T. |
| $C_{18:1}$ Ölsäure | 32,0 - 40,0 Gew.-T. |
| $C_{18:2}$ Linolsäure | 6,0 - 12,0 Gew.-T. |
| $C_{18:3}$ Linoleinsäure | höchstens 1,5 Gew.-T. |
| $C_{20}$ und höhere | höchstens 1,5 Gew.-T. |

Der erste Bereich an Fettsäuren $C_4$-$C_{12}$ von 11,5 bis 17 Teilen bedeutet, daß dieser Bereich als 100% angesehen ein Gemisch an allen einzelnen Fettsäuren $C_4$ bis $C_{12}$, an einer Auswahl oder ein 100%-iger Anteil einer der einzelnen Fettsäuren $C_4$-$C_{12}$ sein kann.

Das gesamte Fettsäuregemisch kann durch geringe Mengen anderer Fettsäuren, z.B. $C_{15}$, verunreinigt sein.

Die erfindungsgemäße Fettkomposition kann also aus den

einzelnen Fettsäuren in den angegebenen Mengenbereichen
oder Einzelfetten bestehen, deren Fettsäuregehalt in der
Summe der oben angegebenen Verteilung entspricht. Dabei
müssen die Mengen der einzelnen Fettsäuren selbstverständlich innerhalb der einzelnen Bereiche so zusammengestellt
werden, daß die Summe 100 ergibt. Der erfindungsgemäße
Futtermittelzusatz der obengenannten Fettkomposition
enthält gegebenenfalls auch einen Emulgator.

Der erfindungsgemäße Futtermittelzusatz wird zu einem
erfindungsgemäßen Futtermittel formuliert, wobei dies
durch Zusatz z.B. der für Milchaustauscher üblichen Bestandteile, wie Magermilchpulver, Süßmolkenpulver und andere übliche Zusätze in den üblichen und vorgeschriebenen Mengen erfolgt. Es ist denkbar, daß je
nach Marktlage statt Magermilchpulver und Süßmolkenpulver andere Substitutionsprodukte treten können.
Auch im Hinblick auf die Adaption an Stutenmilch, Saumilch etc.

Nach einer bevorzugten Ausführungsform soll neben dem Emulgator auch ein Antioxydans vorhanden sein. Als Emulgatoren
können die üblichen Emulgatoren eingesetzt werden, z.B.
Fettsäuremonoglyceride, Fettsäuremonodiglyceride und deren
Ester, Zuckerfettsäureester, natives oder modifiziertes Lecithin oder deren Mischungen.

Als Antioxydantien können ebenfalls die üblichen Antioxydantien eingesetzt werden, z.B. BHT und Ethoxyquin.

Das erfindungsgemäße Futtermittel kann neben den Bestandteilen Magermilchpulver, Maisquellstärke und Fett
auch Süßmolkenpulver sowie die üblichen Zusätze enthalten: Vitamine, Aromastoffe, Füllstoffe,
Farbstoffe etc. Es ist bevorzugt, in dem erfindungsgemäßen Milchaustauscher Maisquellstärke in einer Menge von
5 Gew.-% einzusetzen.

Der erfindungsgemäße Futtermittelzusatz, also der Fettanteil des Futtermittels hat noch einen weiteren Vorteil: er läßt sich zu kleinen Fetteilchen emulgieren, die im Schnitt zwischen 1 und maximal 3 µm, vorzugsweise im Durchschnitt unter 2 µm liegen, und damit dem herkömmlichen Butterfett überlegen sind.

Ein weiterer Vorteil der neuen Fettkomposition liegt darin, daß durch die Auswahl der vier Hauptfettkomponenten nicht nur der Schmelzpunkt der gesamten Fettkomposition, sondern auch der Schmelzpunkt jedes Einzelfettes unter der Körpertemperatur des Tieres, insbesondere des Kalbes, liegt. Der Schmelzpunkt der neuen Fettkomposition liegt bei 30 bis 33°C.

Im folgenden sollen einige Beispiele für die erfindungsgemäßen Futtermittelzusätze gegeben werden, wie sie in der Praxis eingesetzt werden können:

### Tabelle 1

| | Beispiele | | | | | |
|---|---|---|---|---|---|---|
| | 1 | 2 | 3 | 4 | 5 | 6 |
| Knochenfett | 60 % | 66 % | 68 % | 70 % | 72 % | 75 % |
| Kokosfett | 15 % | 6 % | 6 % | 13 % | 10 % | 10 % |
| Palmkernfett | 10 | 18 % | 16 % | 10 % | 12 % | 10 % |
| Sojaöl | 12 | 8 % | 5 % | 5 % | 4 % | 4 % |
| Emulgator | 3 | 2 % | 5 % | 2 % | 2 % | 2 % |
| | 100 | 100 | 100 | 100 | 100 | 100 |

Möchte man nun aus einer der oben angegebenen Fettkompositionen einen Milchaustauscher herstellen, so kann man sich dabei einer der folgenden Rezepturen bedienen.

Tabelle 2

|                          | Beispiel 7 | Beispiel 8 |
|--------------------------|------------|------------|
| Trockenmagermilchpulver  | 61 %       | 70 %       |
| Fett                     | 10 %       | 20 %       |
| übliche Zusätze          | 6 %        | 6 %        |
| Süßmolkenpulver          | 23 %       | 4 %        |
|                          | 100        | 100        |

Beispiel 9

Anwendung in der Praxis

Eingesetzt wurde ein erfindungsgemäßes magermilchhaltiges Milchaustausch-Futtermittel für Kälber in drei Varianten:

|     |                              |
|-----|------------------------------|
| I   | 11 % Fett                    |
|     | 63 % Trockenmagermilch       |
| II  | 16,5 % Fett                  |
|     | 61,0 % Trockenmagermilch     |
| III | 19,5 % Fett                  |
|     | 61,0 % Trockenmagermilch     |

In einem sogenannten "Feldversuch" wurden die drei Milchaustauschertypen in 14 Milchviehbetrieben (Typen I, II und III) und in 4 spezialisierten Kälbermastbetrieben (Typen: II und III) einem Test unter Praxisbedingungen unterzogen.

Es wurde bewußt auf die Durchführung eines exakten Fütterungsversuches in einem speziellen Versuchsstall mit optimierten Haltungsbedingungen verzichtet, da auf Grund umfangreicher Daten in der Literatur ein Ergebnis berechenbar ist, gleichzeitig aber die eigentliche Aussagekraft fraglich, da unter den Bedingungen in einem speziellen Versuchsstall mit:

- optimierten Stallverhältnissen (opt. Temperatur, konst. Luftfeuchte)
- erniedrigtem Infektionsrisiko
- vermindertem Streß
- bestem Management
- konstanter Tränketemperatur

die Ergebnisse nicht unmittelbar auf den "normalen landwirtschaftlichen Betrieb" übertragbar sind.

Auswahlkriterien der Betriebe:

A Milchviehbetrieb
Die Betriebe wurden ausgewählt im Hinblick auf gute Repräsentanz der tatsächlichen Verhältnisse in der Landwirtschaft. Vom TOP-Management bis hin zum "nachlässigen" Betrieb.

Aufstallungsformen:
a) Anbindehaltung oder offen auf Stroh im Kuhstall (2 Betriebe) mit Kontaktmöglichkeit der Kälber untereinander,

b) Haltung in Kälberboxen (einzeln) (überwiegend),

c) Haltung in Kälberboxen (Gruppenhaltung 2 bis 5 Tiere) (1 Betrieb).

Fütterung:
Milchaustauscher mit
a) konstanter Tränketemperatur (Messung mit Thermometer)

b) variabler Tränketemperatur (mit Handgefühl),

c) konstanter Tränkekonzentration, gem. Fütterungshinweisen,

d) individueller Fütterung nach Gefühl.

Gesundheitsprobleme:

a) Betriebe, in denen normalerweise keine Probleme bei
der Kälberaufzucht vorkommen (2 Betriebe),

b) Betriebe, in denen Durchfallprobleme "normalerweise"
in verschiedener Intensität vorkommen (11 Betriebe),

c) Betriebe in denen Durchfallprobleme und respiratorische Erkrankungen vorherrschen (1)

Fütterungsversuche abgeschlossen.

B Mastbetrieb

a) 1 Betrieb mit computergesteuerter Fütterungsanlage
(sog. Transponder), Aufstallung auf Stroh, Temperatur und
Luftfeuchtigkeit variabel, Anzahl der Kälber 35 Tiere;

b) 2 Betriebe mit Anbindehaltung in Kälberboxen, Eimertränke;

c) 1 Betrieb mit Laufstall (Spaltenboden) mit Automatentränke.

Bei allen Betrieben ständiges Infektrisiko (Kälbergrippe);

zu a) niedrige Morbiditätsrate (ca. 15-25 % der Kälber)
bei geringer Mortalitätsrate (unter 1 %) in den letzten
3 Monaten vor Versuchsbeginn,

zu b) hohe Morbiditätsrate (ca. 50 %) der Kälber, hohe Mortalitätsrate (-15 %) (3 Monate vor Versuchsbeginn),

zu c) extrem hohe Morbiditätsrate (über 60 %) der Kälber, sehr hohe Mortalitätsrate (-25 %) (2 Monate vor Versuchsbeginn);

Tränketemperatur in allen Betrieben konstant, Temperatur und Luftfeuchtigkeit nicht konstant (witterungsabhängig),

Stallbelüftung über Ventilatoren.

Kälber durchwegs weiblich.

Auf Grund der Verhältnisse (keine täglichen Wiegungen etc.) sind die Ergebnisse Feldversuch Milchviehbetrieb subjektiv betont.

Ergebnisse Milchviehbetriebe:

| | |
|---|---|
| Anzahl der Kälber insgesamt | 66 Tiere |
| davon weiblich | 29 Tiere |
| davon männlich | 37 Tiere |
| Milchtypen I | 15 Kälber |
| II/III | 51 Kälber |

"Problembestände" mit ständigen Durchfallproblemen bei den Kälbern (Todesfälle) 9 Bestände.

Während der gesamten Versuchsphase (30.5. bis 15.7.84) traten bei keinem Kalb während der Fütterung mit den erfindungsgemäßen Milchaustauschern gesundheitliche Probleme auf, die im Zusammenhang mit der sachgerechten Verfütterung gebracht werden konnten.

Nach Verfütterung von Sojaschrot konnte Durchfall bei 4 Kälbern eines Betriebes festgestellt werden, als Sojaschrot aus der Ration genommen wurde, verschwand auch der Durchfall, so daß die Ursache nicht im Milchaustauscher zu sehen ist.

Ein Kalb war vor der Verfütterung mit Milchaustauscher bereits an einer Pneumonie infolge Fruchtwasseraspiration bei der Geburt erkrankt.

Resultat:

Keinerlei Auftreten von Durchfall selbst in den Problembeständen. Eine diätetische Wirkung des Milchaustauschers war somit eindeutig nachweisbar. Bei 8 Kälbern bestand Durchfall bereits in der Biestmilchperiode, dieser Durchfall verschwand ohne Einleitung von Therapiemaßnahmen beim Umstellen auf den neuen Milchaustauscher. Der neue Milchaustauscher erwies sich also nicht nur verträglicher als die Muttermilch, sondern war darüberhinaus in der Lage, den geschädigten Darm zu normalisieren.

Signifikant niedrige Morbiditätsrate während der Versuchsphase = 0. Die Kälber zeigten sich resistent gegenüber Infekten, wie sie normalerweise in der Keimflora eines Stalles vorkommen,

signifikant höhere Zuwachsraten (je nach verwendetem Milchaustauscher-Typ) bzw. Wachstumsrate (Aufzucht),

deutlich verkürzte Aufzuchtzeit (46 kg Zuwachs in 27 Tagen bei einem Braunviehkalb (Milchaustauscher II),

hervorragende Aufnahme der Tränke durch die Kälber,

sichtbar "schönere Kälber" (glattes, glänzendes Haarkleid) mit sehr gutem Allgemeinbefinden (auffallende Munterkeit der Tiere).

Ergebnisse Kälbermast objektiv:

1. Signifikant erhöhte Verdaubarkeit der Tränke,
2. erhöhte Futterverwertung (1:1,4) - normal 1:1,8-1:2,
3. verkürzte Mastdauer (um 3 Wochen verkürzt),
4. der bisher übliche Einsatz von Anabolica in der Mast als Wachstumsförderer wird überflüssig.

Patentansprüche

1. Futtermittelzusatz, insbesondere für Milchaustauscher, auf der Basis einer Fettmischung aus Palmkernfett, Sojaöl, weiterem Fett, gegebenenfalls einem üblichen Emulgator und Antioxydantien, d a d u r c h   g e k e n n z e i c h n e t , daß er eine Fettkomposition mit folgender Fettsäurenverteilung enthält:

| | |
|---|---|
| $C_4-C_{12}$ | 11,5 - 17,0 Gew.-Teile |
| $C_{14}$ | 4,0 - 8,0 Gew.-Teile |
| $C_{16}$ Palmitinsäure | 15,0 - 25,0 Gew.-Teile |
| $C_{16:1}$ Palmitoleinsäure | 2,0 - 6,0 Gew.-Teile |
| $C_{18}$ Stearinsäure | 9,5 - 17,0 Gew.-Teile |
| $C_{18:1}$ Ölsäure | 32,0 - 40,0 Gew.-Teile |
| $C_{18:2}$ Linolsäure | 6,0 - 12,0 Gew.-Teile |
| $C_{18:3}$ Linoleinsäure | höchstens 1,5 Gew.-Teile |
| $C_{20}$ und höhere | höchstens 1,5 Gew.-Teile. |

2. Futtermittelzusatz nach Anspruch 1, d a d u r c h   g e - k e n n z e i c h n e t , daß er als weiteres Fett Knochenfett und Kokosfett enthält, wobei die Bestandteile in folgenden Mengenanteilen vorliegen:

| | |
|---|---|
| Knochenfett | 60 - 70 Gew.-% |
| Kokosfett | 5 - 12 Gew.-% |
| Palmkernfett | 25 - 10 Gew.-% |
| Sojaöl | 8 - 3 Gew.-% |
| Emulgator und ggf. Antioxydans | 2 - 5 Gew.-% |
| | 100. |

3. Futtermittelzusatz nach einem der Ansprüche 1 oder 2, d a d u r c h   g e k e n n z e i c h n e t , daß der Fettanteil in Teilchen mit einer Teilchengröße von 1 bis 3 µm, vorzugsweise unter 2 µm, vorliegt.

4. Futtermittelzusatz nach Anspruch 1, d a d u r c h   g e -
k e n n z e i c h n e t , daß er als Antioxydans 2,6-Ditert.-
butyl-p-kresol und/oder 6-Ethoxy-1,2-dihydro-2,2,4-trimethyl-
chinolin enthält.


5. Futtermittel, insbesondere Milchaustauscher zur Aufzucht
und Mast von Kälbern, auf der Basis von Magermilchpulver,
4 bis 23 Gew.-% Süßmolkenpulver und 10 bis 20 Gew.-% Fett
sowie 6 Gew.-% üblichen Zusätzen, d a d u r c h   g e -
k e n n z e i c h n e t , daß der Gehalt an Magermilchpulver
61 bis 70 Gew.-% beträgt und der Fettanteil aus

| | |
|---|---|
| Knochenfett | 60 - 70 Gew.-% |
| Kokosfett | 5 - 12 Gew.-% |
| Palmkernfett | 25 - 10 Gew.-% |
| Sojaöl | 8 - 3 Gew.-% |
| Emulgator und ggf. Stabilisator | 2 - 5 Gew.-% |

besteht.


6. Futtermittel, insbesondere Milchaustauscher zur Aufzucht
und Mast von Kälbern auf der Basis von Magermilchpulver, 4
bis 23 Gew.-% Süßmolkenpulver und 10 bis 20 Gew.-% Fett sowie 6 Gew-% üblichen Zusätzen, wobei das Fett Palmkernfett,
Sojaöl, weiteres Fett, einen Emulgator sowie ggf. ein Antioxydans enthält, d a d u r c h   g e k e n n z e i c h n e t,
daß die Fettkomponente eine Fettkomposition mit folgender Verteilung der Fettsäuren darstellt:

| | |
|---|---|
| $C_4$-$C_{12}$ | 11,5 - 17,0 Gew.-Teile |
| $C_{14}$ | 4,0 - 8,0 Gew.-Teile |
| $C_{16}$ Palmitinsäure | 15,0 - 25,0 Gew.-Teile |
| $C_{16:1}$ Palmitoleinsäure | 2,0 - 6,0 Gew.-Teile |
| $C_{18}$ Stearinsäure | 9,5 - 17,0 Gew.-Teile |
| $C_{18:1}$ Ölsäure | 32,0 - 40,0 Gew.-Teile |
| $C_{18:2}$ Linolsäure | 6,0 - 12,0 Gew.-Teile |
| $C_{18:3}$ Linoleinsäure | höchstens 1,5 Gew.-Teile |
| $C_{20}$ und höhere | höchstens 1,5 Gew.-Teile, |

wobei auf

61 - 70 Gew.-% Magermilchpulver

23 - 4 Gew.-% Süßmolkenpulver

10 - 20 Gew.-% Fettzusatz

Emulgator und ggf. Antioxydans     1,4 - 3,4 Gew.-%

übliche Zusätze                    Rest

kommen.


7. Futtermittel nach einem der Ansprüche 5 oder 6, d a -
d u r c h  g e k e n n z e i c h n e t , daß der Fettanteil
in Teilchen mit einer Teilchengröße von 1 bis 3 μm, vorzugsweise unter 2 μm vorliegt.

v. FÜNER       E B B I N G H A U S    F L N C K

**PATENTANWÄLTE**    EUROPEAN PATENT ATTORNEYS

MARIAHILFPLATZ 2 & 3, MÜNCHEN 90
POSTADRESSE: POSTFACH 95 01 60, D-8000 MÜNCHEN 95

0185142

Europäisches Patentamt

8000 München 2

KARL LUDWIG SCHIFF (1964 – 1978)
DIPL. CHEM. DR. ALEXANDER v. FÜNER
DIPL. ING. DIETER EBBINGHAUS
DR. ING. DIETER FINCK

TELEFON (089) 48 20 54
TELEX 5-23 565 AURO D
TELEFAX III-II-AUTOM. (089) 48 20 58
TELEGRAMME AUROMARCPAT MÜNCHEN

KONTEN/ACCOUNTS:
BAYER. VEREINSBANK MÜNCHEN 626 000 4
US-$ CURRENCY ACCOUNT 806 227 102
SWIFT-ADRESSE: BVBE DE MM

EPA-EPO-OEB
D G 1
Recu le
0 6 SEP. 1985

3. September 1985

Betr.: Europäische Patentanmeldung Nr. 85110965.2
      Anmelder: Karwendel-Werke Franz X. Huber
      Unsere Akte: EPAA-33037.0

Es wird gebeten, auf Seite 7 im Beispiel 6 die Prozentangabe
"4" für Sojaöl in "3" zu berichtigen. Nur mit diesem Zahlenwert
ist die angegebene Summe von 100 % erreichbar.

Es handelt sich um die Berichtigung einer offensichtlichen Unrichtigkeit im Sinne der Regel 88.

Patentanwalt

Fi/Re